# EUROPÄISCHE PATENTSCHRIFT

(11) **EP 0 781 594 B1**
(45) Veröffentlichungstag und Bekanntmachung des Hinweises auf die Patenterteilung: **03.04.2002**
(21) Anmeldenummer: 96810898.5
(22) Anmeldetag: 23.12.1996
(51) Int. Cl.: B01J 3/00, G02B 7/00, B01J 2/16

(54) **Wandung, die mindestens ein Fenster mit mindestens einer Glasscheibe besitzt**
Wall comprising at least one window with at least one glass pane
Paroi comprenant au moins une fenêtre avec au mois un panneau de vitre

(30) Priorität: 29.12.1995 CH 370895
(43) Veröffentlichungstag der Anmeldung: 02.07.1997
(73) Patentinhaber: GLATT GMBH, 79589 Binzen (DE)
(72) Erfinder: Luy, Bernhard, Dr., 79102 Freiburg (DE); Tondar, Matthias, 78966 Hausen i.W. (DE)
(74) Vertreter: Eder, Carl E.

(56) Entgegenhaltungen:
- EP-A- 0 277 508
- EP-A- 0 365 802
- GB-A- 805 812
- GB-A- 2 268 094
- US-A- 3 918 396
- PATENT ABSTRACTS OF JAPAN vol. 10, no. 86 (P-443), 4.April 1986 & JP 60 222744 A (MITSUI ZOSEN K.K.), 7.November 1985,
- PATENT ABSTRACTS OF JAPAN vol. 18, no. 75 (C-1163), 8.Februar 1994 & JP 05 285363 A (POWREX K.K.), 2.November 1993, & DATABASE WPI Section Ch, Week 9348 Derwent Publications Ltd., London, GB; Class J04, AN 93-382348 & JP 05 285 363 A (PAUREC K.K.)

## Beschreibung

Die Erfindung betrifft eine Wandung, die einen Innenraum umschliesst und mindestens einen Wandungsteil mit mindestens einem Fenster aufweist, das mindestens eine an den Innenraum angrenzende Glasscheibe besitzt.

Die Wandung kann zum Beispiel einen Behälter bilden, der zum Aufnehmen eines zu bewegenden und zu behandelnden, teilchenförmigen oder eventuell pastösen Gutes und/oder zum Filtrieren von durch ein teilchenförmiges Gut hindurch geleitetem Gas dient. Der Behälter kann insbesondere als Gut- und Wirbelschicht-Behälter ausgebildet sein und einen Wirbel- und Prozessraum zum Aufnehmen, Verwirbeln und Behandeln eines teilchenförmigen Gutes begrenzen, das zum Beispiel zur Bildung eines Arzneimittels dient.

Ein aus der GB 805 812 A bekannter Vakuum-Behälter mit einem Fenster besitzt einen unlösbar an einem Wandungsteil befestigten Tragring, eine mit einem Klemmring an diesem festgeklemmte Glasscheibe und eine diese dicht mit dem Tragring verbindenden Dichtung. Bekannte Gut- und Wirbelschicht-Behälter haben mindestens einen zylindrischen oder konischen Wandungsteil, an dem für das bzw. jedes Fenster ein Tragring angeordnet und über einen kurzen Stutzen mit dem Mantel verbunden ist. Das bzw. jedes Fenster hat eine Glasscheibe, die zum Beispiel ähnlich wie diejenige des aus der GB 805 812 A bekannten Fensters mit einem Klemmring und mit Schrauben wegnehmbar am Tragring und mit einer gummielastischen Dichtung - beispielsweise einer Flachdichtung - befestigt ist.

Solche Fenster haben auf der Innenseite im Stutzen, beim Tragring und vor allem bei der Dichtung Nischen, Kehlen, Spalte, Ritzen, und dergleichen. Diese haben zum Teil kantige Ränder und bilden Toträume für durch den Behälter strömendes Gas. In solchen Toträumen können sich beim Verwirbeln eines Gutes Gut-Teilchen und/oder Staub und/oder Sprühmaterial und/oder andere Verunreinigungs-Materialien ablagern. Bei bekannten Wirbelschicht-Einrichtungen geschieht es zudem beim Zersprühen eines klebrigen Sprühmaterials oft, dass durch Ablagern von Material von einem sich beim Rand des Fensters befindenden Totraum aus in kurzer Zeit eine die Innenfläche der Glasscheibe zu einem grossen Teil oder sogar vollständig bedeckende Schicht aufgebaut wird und das Fenster seinen Zweck nicht mehr erfüllt. Ferner besteht die Gefahr, dass sich in den Nischen, Kehlen, und/oder Spalten und/oder Ritzen Kulturen von Mikroorganismen entwickeln.

Wenn die im Behälter einer Wirbelschicht-Einrichtung verarbeiteten, teilchenförmigen Güter beispielsweise zur Bildung von Arzneimitteln dienen und/oder giftige Substanzen enthalten, ist es daher oft und insbesondere beim Wechseln der verarbeiteten Güter erforderlich den Klemmring, die Glasscheibe und die Dichtung von jedem Fenster zum Reinigen durch Lösen von Schrauben von der restlichen Wandung sowie voneinander zu trennen und nach der Reinigung wieder an der Wandung zu befestigen. Dies kann eine Kontamination der Umgebung und des Bedienungspersonals mit gesundheitsgefährdenden oder sonst schädlichen Stoffen verursachen. Des weiteren kann eine ungenügende Sorgfalt des eine Reinigung durchführenden Personals die Reinheit und Qualität der nach der Reinigung hergestellten Produkte verschlechtern. Das Demontieren, Reinigen, Trocknen und danach wieder erforderliche Montieren des Fensters verursachen ferner viel Arbeit und erfordern viel Zeit. Wenn ein Fenster nach einer Reinigung wieder montiert wird, besteht zudem die Gefahr, dass sich ein Leck ergibt. Des weiteren muss die bzw. jede Dichtung von Zeit zu Zeit ersetzt werden.

Ähnliche Probleme stellen sich auch bei Fenstern von anderen Behältern, die zum Beispiel zum Bewegen und/oder Behandeln eines Gutes und/oder zum Durchführen chemischer und/oder biologischer Reaktionen und/oder zum Filtrieren und Entstauben von durch ein Gut hindurch geleitetem Gas und/oder zum Filtrieren einer Flüssigkeit dienen. Ferner können sich auch ähnliche Probleme bei Fenstern von Leitungen zum Leiten eines fliessfähigen Materials ergeben.

Die EP 0 365 802 A und die dieser entsprechende US 4 961 628 A offenbaren eine zur Bildung eines Fensters dienende Verbundplatte mit einer ringförmigen Fassung aus Stahl und einer in die Fassung eingeschmolzenen Glasscheibe. Die Befestigung der Verbundplatte ist nicht offenbart. Aus der Praxis ist es jedoch bekannt, derartige Verbundplatten mit Schrauben und Klemmringen lösbar zu befestigen und mit mindestens einer gummielastischen Dichtung abzudichten.

Eine aus der Zusammenfassung der JP 60 222 744 A bekannte Einrichtung besitzt ein Rohr und dient zur Durchführung von Messungen an einem durch das Rohr strömenden, Teilchen enthaltenden Luftstrom. Die Einrichtung weist einen rechtwinklig vom Mantel des Rohrs wegragenden, kurzen Stutzen auf, der an seinem dem Rohr abgewandten Ende mit einem Tragring versehen ist. An diesem ist eine zur Bildung eines Fensters dienende Glasscheibe befestigt. Aus der Zusammenfassung und der möglicherweise nicht alle Teile des Fensters zeigenden Zeichnung kann nicht entnommen werden, wie die Glasscheibe am Tragring befestigt ist und ob und wie die Verbindung der Glasscheibe mit dem Tragring abgedichtet ist. Der Stutzen begrenzt zusammen mit dem Mantel des Rohrs und der Glasscheibe einen Totraum für den Luftstrom, so dass Teilchen beim Fenster abgelagert werden. Falls die Einrichtung gemäss der JP 60 222 744 A noch eine nicht gezeichnete Dichtung aufweist, verursacht diese ähnliche Probleme, wie die Dichtungen der vorher beschriebenen Einrichtungen. Ferner ist es fraglich, ob das aus der JP 60 222 744 A bekannte Fenster grosse Temperaturänderungen und im Innenraum des Rohrs gegenüber der Umgebung auftretende Über- oder Unterdrücke aushält, ohne dass die Glasscheibe beschädigt oder vom Rohr weggedrückt wird.

Der Erfindung liegt die Aufgabe zugrunde eine mindestens ein Fenster aufweisenden Wandung zu schaffen, mit der Nachteile der bekannten Wandungen vermieden werden können. Dabei soll insbesondere ermöglicht werden, dass sich möglichst wenig Verunreinigungen auf der Innenseite des bzw. jedes Fensters ansammeln und dass das bzw. jedes Fenster ohne Demontage gut gereinigt werden kann.

Diese Aufgabe wird gemäss der Erfindung durch eine Wandung mit den Merkmalen des Anspruchs 1 gelöst.

Die Erfindung betrifft ferner einen Behälter mit den Merkmalen des Anspruchs 14.

Vorteilhafte Weiterbildungen der Wandung gehen aus den abhängigen Ansprüchen hervor.

Gemäss der Erfindung ist die Fassung des bzw. jedes Fensters dicht und unlösbar mit dem bzw. einem Wandungsteil der Wandung verbunden. Die bzw. jede Glasscheibe eines Fensters ist dicht und vorzugsweise ebenfalls unlösbar mit der Fassung des betreffenden Fensters verbunden. Mit "unlösbar verbunden" ist dabei gemeint, dass die Glasscheibe(n), die Fassung und der mit dem Fenster versehene Wandungsteil nicht durch Lösen von Schrauben oder Schnellverschlussteilen oder andern durch Bewegen lösbaren Befestigungselementen voneinander getrennt werden können. Die Glasscheibe(n), die Fassung und der ein Fenster aufweisende Wandungsteil können daher nur unter Inkaufnahme einer Beschädigung der Glasscheibe und/oder eines andern Teils des Fensters und/oder des das Fenster aufweisenden Wandungsteils voneinander getrennt werden.

Die bzw. jede Glasscheibe eines Fensters ist zum Beispiel durch Einschmelzen in die Fassung des Fensters mit der Fassung verbunden, wie es aus der schon zitierten EP 0 365 802 A sowie der dieser entsprechenden US 4 961 628 A bekannt ist. Die Fassung bildet dann zum Beispiel zusammen mit der bzw. jeder von ihr umschlossenen Glasscheibe eine Verbundplatte. Die Fassung besteht vorzugsweise aus einem einstückigen, metallischen Körper und ist zum Beispiel mit einem Verbindungsteil bzw. Halter verschweisst, der seinerseits mit dem das betreffende Fenster aufweisenden Wandungsteil verschweisst ist. Die Fassung könnte jedoch eventuell auch direkt mit einem Wandungsteil, beispielsweise einem einstückigen, eine Achse umschliessenden Mantel aus Blech verschweisst sein. Die Fassung kann durch mindestens eine Schweiss-Verbindung über einen Verbindungsteil bzw. Halter oder unmittelbar, d.h. direkt, dauerhaft und vollkommen dicht mit dem bzw. einem Wandungsteil verbunden werden. Schweiss-Verbindungen können auch grosse Kräfte aufnehmen, so dass in dem von der Wandung umschlossenen Innenraum grosse Über- oder Unterdrücke gegenüber der Umgebung der Wandung herrschen können, ohne dass das Fenster beschädigt wird. Ferner sind Schweiss-Verbindungen auch beständig gegen - in bezug auf die normale Raumtemperatur - hohe und tiefe Temperaturen sowie gegen organische Lösungsmittel und andere chemische Einflüsse.

Eventuell könnte man jedoch die oder mindestens eine zum mittelbaren oder unmittelbaren Verbinden einer Fassung mit einem Wandungsteil dienende Schweiss-Verbindung durch eine Hartlöt- und/oder Weichlöt- und/oder Kleb-Verbindung ersetzen.

Bei der erfindungsgemässen Wandung können die bzw. jede Glasscheibe und die Fassung eines Fensters ohne gummielastische Dichtung dicht mit einem formfesten, beispielsweise metallischen Wandungsteil verbunden werden. Dies ermöglicht wiederum, das Fenster derart stufenlos sowie fugenlos am Wandungsteil zu befestigen, dass sich keine Nischen, Kehlen, Spalte, Ritzen oder sonstige Toträume für ein durch den Innenraum strömendes Fluid ergeben. Dies verhindert oder vermindert zumindest unerwünschte Materialablagerungen beim Fenster und verbessert dessen Reinigbarkeit. Die an den Innenraum angrenzenden Innenflächen des Fensters und der diesen benachbarten Abschnitte des Wandungsteils können daher ohne Demontage des Fensters einwandfrei gereinigt werden, indem im Innenraum eine Reinigungsflüssigkeit zersprüht wird. Eine derartige Reinigung gewährleistet eine reproduzierbare Reinheit, vermeidet die bei den bekannten Fenstern durch deren Demontage verursachte Kontaminationsgefahr und verursacht nur einen geringen Zeit- und Arbeitsaufwand.

Der Erfindungsgegenstand wird anschliessend anhand in der Zeichnung dargestellter Ausführungsbeispiele erläutert. In der Zeichnung zeigt,
die Fig. 1 eine Ansicht einer Wirbelschicht-Einrichtung mit einem Gut- und Wirbelschicht-Behälter und einem Nachentstauber,
die Fig. 2 einen Vertikalschnitt durch einen zylindrischen Wandungsteil und ein kreisförmiges Fenster des Gut- und Wirbelschicht-Behälters in grösserem Massstab,
die Fig. 3 einen Horizontalschnitt durch den in der Figur 2 ersichtlichen Wandungsteil und das an diesem angeordnete Fenster,
die Fig. 4 einen Ausschnitt aus der Fig. 3 in grösserem Massstab,
die Fig. 5 eine Stirnansicht des in der Fig. 1 ersichtlichen, länglichen, mehrere Glasscheiben aufweisenden Fensters in grösserem Massstab als in der Fig. 1 und
die Fig. 6 einen Querschnitt durch eine Variante eines Verbindungsteil eines Fensters.

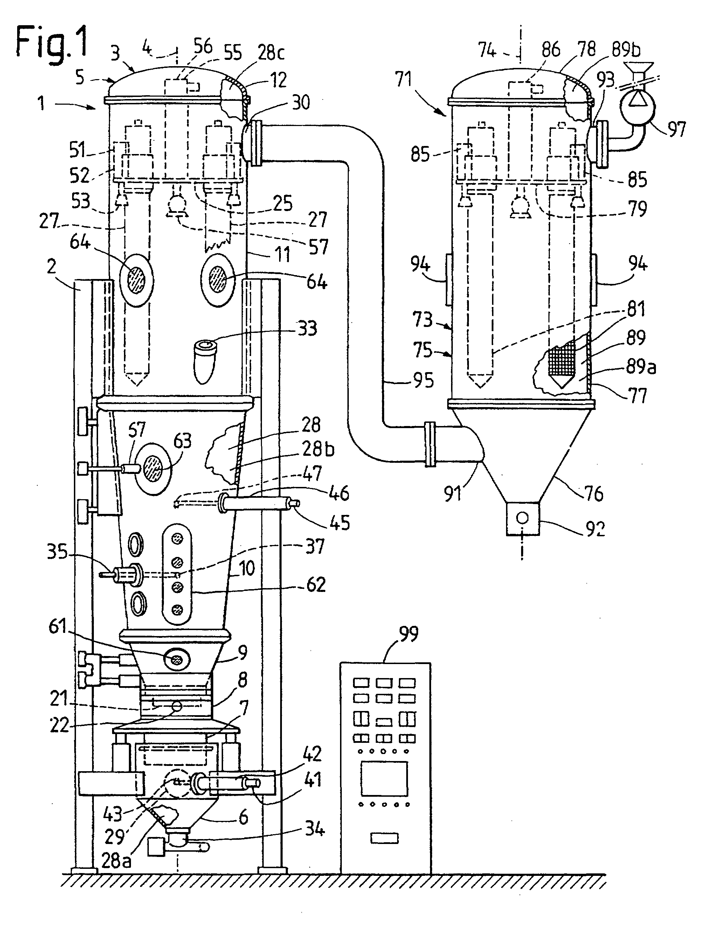

Die in der Fig. 1 ersichtliche Wirbelschicht-Einrichtung 1 weist ein Gestell 2 auf. Dieses besitzt zwei vertikale Säulen und hält einen zwischen den Säulen angeordneten Gut- und Wirbelschicht-Behälter 3. Der Behälter 3 definiert eine vertikale Behälterachse 4 und hat eine im allgemeinen zu dieser rotationssymmetrische Wandung 5. Diese besitzt mehrere übereinander angeordnete, lösbar und/oder verstellbar sowie in der gezeichneten Stellung dicht miteinander verbundene Wandungsteile, nämlich von unten nach oben einen Boden-Wandungsteil 6, einen vertikal verschiebbaren Wandungsteil 7, einen im allgemeinen zylindrischen Verbindungs-Wandungsteil 8, einen konischen Gutkammer-Wandungsteil 9, einen konischen Expansionskammer-Wandungsteil 10, einen zylindrischen Filterkammer-Wandungsteil 11 und einen Deck-Wandungsteil 12.

Ein gasdurchlässiger Siebboden 21 ist im Behälter 3 angeordnet. Der Siebboden 21 ist mit Lager- und Schwenkmitteln 22 um eine horizontale Schwenkachse verschwenkbar am Verbindungs-Wandungsteil 8 gelagert und in verschiedenen Schwenkstellungen fixierbar. Der Siebboden 21 kann insbesondere in einer normalen horizontalen Betriebs-Stellung und in einer ungefähr vertikalen Entleerungsstellung festgehalten werden. Der Behälter 3 weist noch einen inneren Wandungsteil 25 auf, der eine Trennwand bildet. Der innere Wandungsteil 25 ist in der oberen Hälfte des Filterkammmer-Wandungsteils 11 angeordnet, von dieser umschlossen und mit dieser verbunden. Der innere Wandungsteil 25 hält mindestens ein lösbar an ihm befestigtes Filter 27, wobei vorzugsweise mindestens zwei voneinander im Abstand stehende Filter 27 vorhanden sind.

Wenn die Wandungsteile 6 bis 12 dicht miteinander verbunden sind, umschliessen sie zusammen einen Behälter-Innenraum 28, der dicht gegen die Umgebung abgeschlossen ist. Der sich in der normalen, horizontalen Betriebs-Stellung befindende Siebboden 21 und der innere Wandungsteil 25 sowie die an diesem befestigten Filter 27 unterteilen den Innenraum 28 in einen sich unter dem Siebboden befindenden Gasverteiler-Raum 28a, einen sich zwischen dem Siebboden und dem inneren Wandungsteil 25 befindenden Wirbel- und Prozessraum 28b und einen sich oberhalb des inneren Wandungsteils 25 befindenden Reingas-Raum 28c.

Der Boden-Wandungsteil 6 ist mit einem Gaseinlass 29 versehen. Am Filterkammer-Wandungsteil 11 ist oberhalb des inneren Wandungsteils 25 ein Gasauslass 30 angeordnet. Der Behälter 3 besitzt ferner einen in den Prozessraum 28b mündenden Guteinlass 33 und einen am unteren Ende des Boden-Wandungsteils 6 angeordneten Gutauslass 34. Der Guteinlass und der Gutauslass haben wahlweise abschliessbare und freigebbare Durchgänge. Ferner ist eine Sprühvorrichtung 35 vorhanden, die mindestens ein im Prozessraum 28b angeordnetes Sprühorgan 37 mit mindestens einer Düse aufweist, um ein mindestens zum Teil flüssiges Sprühmaterial auf die im Behälter 3 verwirbelten Teilchen des teilchenförmigen Gutes zu sprühen.

Mindestens eine Nass-Reinigungsvorrichtung bzw. Waschvorrichtung 41 besitzt eine unterhalb des Siebbodens 21 am Boden-Wandungsteil 6 befestigte Halterung mit einem Gehäuse 42 und mindestens ein Sprühorgan 43 mit mindestens einer Sprühdüse bzw. Auslassöffnung. Mindestens eine Nass-Reinigungsvorrichtung bzw. Waschvorrichtung 45 besitzt eine oberhalb des Siebbodens 21 sowie oberhalb der Sprühvorrichtung 35 am Expansionskammer-Wandungsteil 10 befestigte Halterung mit einem Gehäuse 46 und mindestens ein Sprühorgan 47 mit mindestens einer Sprühdüse bzw. Auslassöffnung. Die Gehäuse 42, 46 sind im wesentlichen ausserhalb der Wandung 5 angeordnet und enthalten einen dicht gegen die Umgebung abgeschlossenen Gehäuse-Innenraum. Die Sprühorgane 43 und 47 sind horizontal verschiebbar in den Gehäusen 42 bzw. 46 geführt und können wahlweise in eine Ruhe-Stellung oder in eine in der Fig. 1 gezeichnete Reinigungs-Stellung gebracht werden. In der Ruhe-Stellung befinden sie sich im wesentlichen ausserhalb des Behälter-Innenraums 28 des Behälters in den Gehäusen 42 bzw. 46. Die Innenräume der letzteren sind dann beispielsweise durch die Sprühorgane 43 und 47 und/oder durch zusätzliche Verschlusselemente ungefähr bündig mit der Innenfläche der Wandung 5 gegen den Behälter-Innenraum 28 abgeschlossen. In der Reinigungs-Stellung befindet sich jedes Sprühorgan 43 und 47 mindestens teilweise im Gasverteiler-Raum 28a bzw. im Wirbel- und Prozessraum 28b. Die Sprühdüsen der Sprühorgane 43 und 47 befinden sich dann zum Beispiel ungefähr bei der Behälterachse 4. Die Sprühorgane 43, 47 können eine ihnen zugeführte Reinigungsflüssigkeit beispielsweise in einen Raum sprühen, der sich über einen ziemlich grossen Raumwinkel erstreckt. Die bzw. eine Sprühdüse bzw. Auslassöffnung des unteren Sprühorgans 43 ist dabei nach oben gerichtet. Die bzw. mindestens eine Sprühdüse bzw. Auslassöffnung des oberen Sprühorgans 47 ist nach unten gerichtet.

Der innere Wandungsteil 25 hält ferner mindestens eine Nass-Reinigungsvorrichtung bzw. Waschvorrichtung, wobei zum Beispiel mehrere um die Behälterachse 4 herum verteilte Nass-Reinigungssvorrichtungen bzw. Waschvorrichtungen 51 und eine zur Behälterachse koaxiale, grössere Nass-Reinigungsvorrichtung bzw. Waschvorrichtung 55 vorhanden sind. Jede Nass-Reinigungsvorrichtung 51, 55 hat ein sich im wesentlichen oberhalb des inneren Wandungsteils 25 im Behälter 3 befindendes Gehäuse 52 bzw. 56 und ein Sprühorgan 53 bzw. 57. Jedes Gehäuse 52, 56 begrenzt einen dicht gegen den Reingas-Raum 28c abgeschlossenen Gehäuse-Innenraum. Jedes Sprühorgan 53, 57 ist verstellbar und verschiebbar im zugeordneten Gehäuse 52 bzw. 56 geführt und kann wahlweise in eine Ruhe-Stellung und in eine in der Fig. 1 gezeichnete Reinigungs-Stellung gebracht werden. Die Sprühorgane 53, 57 befinden sich in der Ruhe-Stellung im wesentlichen innerhalb des zugeordneten Gehäuses uns sind dann ungefähr oder genau bündig mit der unteren Fläche des inneren Wandungsteils 25. In der Reinigungs-Stellung befindet sich jedes Sprühorgan 53 und 57 mindestens zum Teil im Wirbel- und Prozessraum 28b. Die Sprühdüsen der Sprühorgane 53, 57 befinden sich dann zum Beispiel ungefähr in der Höhe der oberen Endabschnitte der Filter 27.

Die Gehäuse 42, 46, 52, 56 der verschiedenen Nass-Reinigungsvorrichtungen 41, 45, 51, 55 haben einen Einlass für eine Reinigungsflüssigkeit. Jede Nass-Reinigungsvorrichtung ist zum Beispiel ferner mit einer Feder versehen und derart ausgebildet, dass das Sprühorgan ausgehend von seiner Ruhe-Stellung beim Zuführen einer unter Druck stehenden Reinigungsflüssigkeit entgegen der von der Feder erzeugten Rückstellkraft in die Reinigungs-Stellung verschoben wird. Das Sprühorgan bleibt dann in der Reinigungs-Stellung bis die Zufuhr von Reinigungsflüssigkeit beendet und das Sprühorgan durch die Feder in die Ruhe-Stellung zurückverschoben wird.

Der Behälter 3 ist mit mindestens einem an der Wandung 5 angeordneten Fenster und nämlich mit mehreren an den Wirbel- und Prozessraum 28b angrenzenden Fenstern versehen. Der Behälter 3 weist zum Beispiel ein am Wandungsteil 9 angeordnetes Fenster 61, zwei am Wandungsteil 10 angeordnete Fenster 62 sowie 63 und zwei am Wandungsteil 11 angeordnete Fenster 64 auf. Die Fenster 61, 63 und 64 haben in Draufsichten auf ihre Stirnseiten einen kreisförmigen Umriss. Das Fenster 62 hat in einer Draufsicht auf seine Stirnseite eine längliche Umrissform. Jedes Fenster besitzt mindestens eine Glasscheibe. Die Glasscheiben der Fenster 61, 62, 64, 65 dienen als Schauglas, durch welches eine Person in den Wirbel- und Prozessraum 28b hineinsehen kann.

Eine beim Fenster 63 ausserhalb von diesem und dem Behälter 3 angeordnete Beleuchtungsvorrichtung 67 besitzt mindestens eine elektrische Lichtquelle um Licht durch die Glasscheibe des Fensters 63 hindurch in den Behälter-Innenraum 28 hinein zu strahlen. Die Beleuchtungsvorrichtung 67 kann eventuell derart ausgebildet und angeordnet sein, dass eine Person an der Beleuchtungsvorrichtung vorbei durch die Glasscheibe des Fensters 63 in den Behälter hineinschauen kann. Im übrigen können noch zusätzliche, nicht sichtbare Fenster und/oder Beleuchtungsvorrichtungen am Behälter 3 vorhanden sein.

Die Einrichtung 1 weist einen Nachentstauber 71 mit einem Nachentstauber-Behälter 73 auf. Dessen Wandung 75 ist im allgemeinen rotationssymmetrisch zu einer vertikalen Behälterachse 74 und besitzt mehrere lösbar miteinander verbundene Wandungsteile, nämlich einen im wesentlichen konischen, sich nach unten verjüngenden Boden-Wandungsteil 76 einen im wesentlichen zylindrischen Wandungsteil 77 und einen gewölbten Deck-Wandungsteil 78. Im Nachentstauber-Behälter 73 ist ein innerer Wandungsteil 79 befestigt, der eine Trennwand bildet. Der innere Wandungsteil 79 hält mindestens ein und vorzugsweise mehrere Filter 81. Ferner enthält der Behälter 73 mindestens eine Nass-Reinigungsvorrichtung bzw. Waschvorrichtung, wobei zum Beispiel einige um die Behälterachse 74 herum verteilte Nass-Reinigungsvorrichtungen bzw. Waschvorrichtungen 85 und eine grössere, zur Behälterachse 74 koaxiale Nass-Reinigungsvorrichtung bzw. Waschvorrichtung 86 am inneren Wandungsteil 79 lösbar befestigt sind. Die Filter 81 und die Nass-Reinigungsvorrichtungen 85, 86 sind zum Beispiel gleich oder ähnlich ausgebildet wie die Filter 19 und Nass-Reinigungsvorrichtungen 51 bzw. 55.

Die Wandungsteile 76, 77, 78 schliessen zusammen einen Innenraum 89 dicht gegen die Umgebung ab. Der als Trennwand Behälter dienende innere Wandungsteil 79 und die an diesem befestigten Filter 81 unterteilen den Innenraum 89 in einen Rohgas-Raum 89a und einen Reingas-Raum 89b, wobei sich der Rohgas-Raum 89a unter und der Reingas-Raum 89b über dem inneren Wandungsteil 79 befindet. Der Behälter 73 hat einen in den Rohgas-Raum 89a mündenden Gaseinlass 91, einen am unteren Ende des Bodenteils 76 angeordneten, wahlweise verschliessbaren und freigebbaren Auslass 92 und einen aus dem Reingas-Raum 89b herausführenden Gasauslass 93. Der Wandungsteil 77 weist mindestens ein Fenster 94 und beispielsweise mindestens zwei solche auf.

Die Wirbelschicht-Einrichtung 1 besitzt noch Gasleitmittel, um ein Prozessgas, nämlich Luft, von unten nach oben durch die beiden Behälter 3, 73, hindurchzuleiten. Die Gasleitmittel besitzen eine nicht gezeichnete, mit dem Gaseinlass 29 des Gut- und Wirbelschicht-Behälters 3 verbundene Gasleitung, eine den Gasauslass 30 des Gut- und Wirbelschicht-Behälters 3 mit dem Gaseinlass 91 des Nachentstauber-Behälters 73 verbindende Gasleitung 95 und eine mit dem Gasauslass 93 des Nachentstaubers verbundene Saugvorrichtung 97. Ferner ist eine Anzeige- und Steuervorrichtung 99 mit elektronischen und pneumatischen Beuelementen, Lämpchen, Leuchtdioden, Anzeigeinstrumenten, eventuell einem Bildschirm und manuell bedienbaren Schaltern und sonstigen Bedienungselementen vorhanden, um die Wirbelschicht-Einrichtung 1 zu überwachen sowie durch eine Person und/oder automatisch zu steuern.

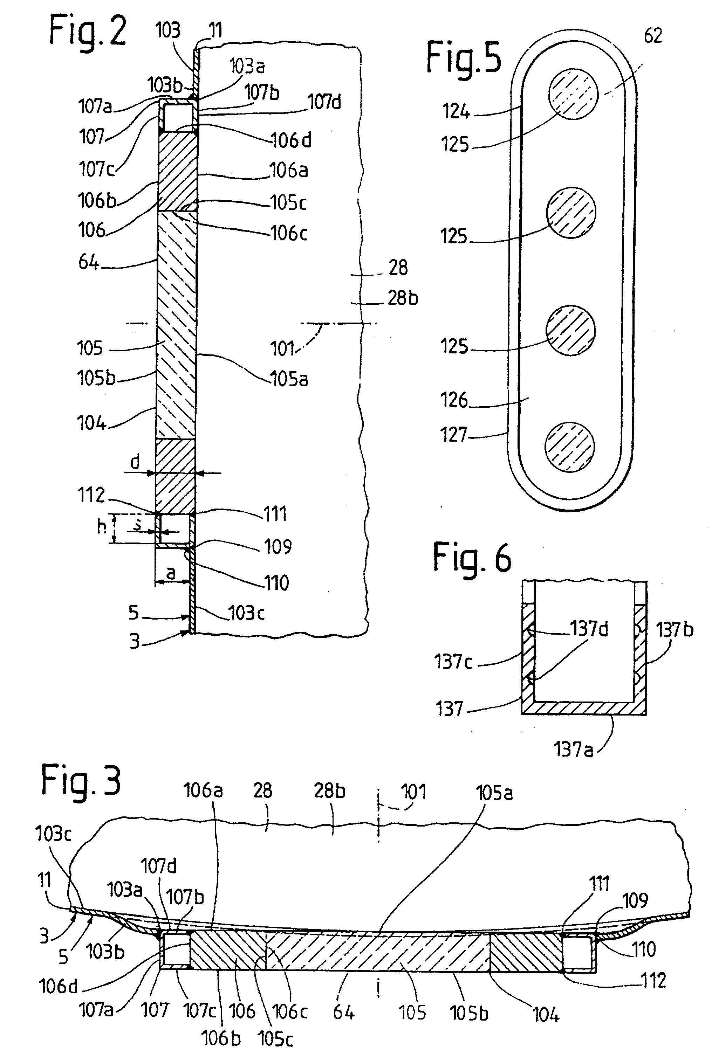

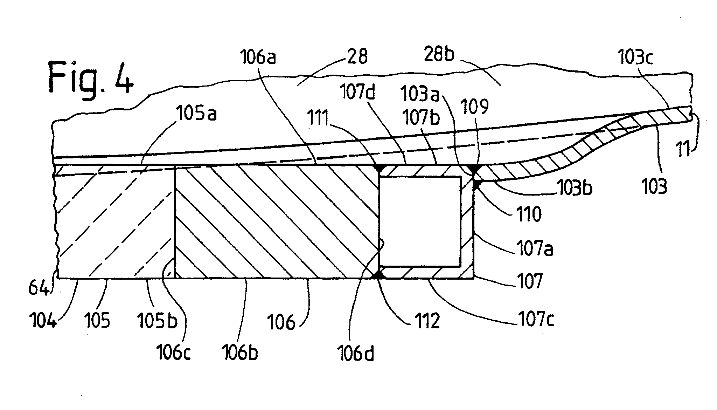

Anschliessend wird die Ausbildung von einem der Fenster 64 anhand der Figuren 2, 3 und 4 näher erläutert. Das Fenster 64 definiert eine mit 101 bezeichnete Fensterachse, welche die Behälterachse 4 rechtwinklig kreuzt. Der Wandungsteil 11 weist einen im wesentlichen zylindrischen Mantel 103 aus einem metallischen, schweissbaren Material, vorzugsweise rostfreiem Stahl und an den Enden des Mantels unlösbar und dicht mit diesem verschweisste Ringflansche auf. Der Mantel 103 ist für jedes am Wandungsteil 11 angeordnete Fenster 64 mit einem Loch 103a versehen, das durch einen mindestens teilweise vom zylindrischen Hauptabschnitt des Mantels 103 weg leicht nach aussen ragenden Verbindungsabschnitt 103b begrenzt ist. Der Mantel 103 und jeder seiner Verbindungsabschnitte 103b bestehen aus einem zusammenhängenden, einstückigen Blechteil und haben eine Innenfläche 103c. Bei der Herstellung des Wandungsteils 11 kann man den ursprünglich vollständig zylindrischen Mantel 103 für jedes Fenster 64 mit einem Loch 103a versehen und dann mit einer Umformvorrichtung den Verbindungsabschnitt, d.h. mindestens zum grössten Teil derart leicht nach aussen biegen, dass der an das Loch 103a angrenzende Rand der Innenfläche 103c in einer zur Behälterachse 4 parallelen sowie zur Fensterachse 101 rechtwinkligen Ebene liegt und einen Kreis bildet. Der Verbindungsabschnitt 103b ist in durch die Fensterachse 101 verlaufenden Schnitten mindestens teilweise gebogen und hängt beispielsweise in allen durch die Fensterachse verlaufenden Schnitten über gebogene Übergangsabschnitte stetig, d. h. ohne Ecken und Kanten, mit dem zylindrischen Hauptabschnitt des Mantels 103 zusammen.

Das Fenster 64 hat eine ebene Verbundplatte 104 mit einer aus mineralischem Glas bestehenden, ebenen Glasscheibe 105 mit kreisförmigem Umriss. Die Glasscheibe 105 besitzt eine an den Innenraum 28 angrenzende, ebene Innenfläche 105a, eine zu dieser parallele, ebene Aussenfläche 105b und eine zylindrische Umfangsfläche 105c. Die Verbundplatte 104 besitzt ferner eine Fassung 106. Diese ist durch einen kreisförmigen Ring aus einem metallischen, schweissbaren Material, beispielsweise rostfreiem Stahl gebildet. Das Material der ringförmigen Fassung 106 bildet im Querschnitt ein volles Viereck, nämlich ein rechtwinkliges Parallelogramm und zum Beispiel ein Rechteck. Die Fassung 106 hat eine an den Innenraum 28 angrenzende, ebene Innenfläche 106a, eine zu dieser parallele, ebene Aussenfläche 106b, eine der Glasscheibe zugewandte, zur Fensterachse parallele, zylindrische Mantelflächen 106c und eine der Glasscheibe abgewandte, zylindrische Umfangsfläche 106d. Die Glasscheibe 105 liegt mit ihrer Umfangsfläche 105c an der Mantelfläche 106c der Fassung 106 an und ist unlösbar sowie dicht mit der Fassung verbunden, nämlich in diese eingeschmolzen. Die Glasscheibe 105 und die Fassung 106 sind gleich dick und haben die parallel zur Fensterachse 101 gemessene Dicke d.

Die Fassung 106 ist über einen metallischen, verschweissbaren und zwar aus rostfreiem Stahl bestehenden, ursprünglich vom Mantel 103 und der Fassung 106 getrennten Verbindungsteil bzw. Halter 107 unlösbar und dicht mit dem Verbindungsabschnitt 103b verbunden, nämlich in noch näher beschriebener Weise verschweisst. Der Verbindungsteil bzw. Halter 107 besteht aus einem einstückigen Ring mit einem kreisförmigen Umriss. Das Material des ringförmigen Verbindungsteils 107 ist im Querschnitt U-förmig, so dass der Verbindungsteil also ein U-förmiges Profil hat. Der Verbindungsteil 107 besitzt in einem durch die Fensterachse 101 verlaufenden Schnitt einen zylindrischen Steg 107a, der die am weitesten von der Fensterachse 101 entfernte Begrenzung des Verbindungsteils bildet. Der Verbindungsteil 107 besitzt ferner zwei vom Steg 107a weg nach innen gegen die Fensterachse 101 ragende, ebene, zueinander parallele und zur Fensterachse rechtwinklige Schenkel 107b, 107c. Der Schenkel 107b befindet sich näher beim Mantel 103 und beim Behälter-Innenraum 28 und bildet also den inneren Schenkel des Verbindungsteils. Der Schenkel 107c bildet dementsprechend den äusseren Schenkel des Verbindungsteils. Der innere Schenkel 107b bildet mindestens den grössten Teil der an den Innenraum 28 angrenzende Innenfläche 107d des Verbindungsteils 107. Der Aussendurchmesser des ringförmigen Verbindungsteils 107 ist mindestens ungefähr gleich dem Durchmesser des Lochs 103a. Der Verbindungsteil 107 liegt beim äusseren, mit dem Steg 107a zusammenhängenden Ende seines inneren Schenkels 107b an dem den Mantel 103 abgewandten Ende oder Rand des Verbindungsabschnitts 103b an. Der letztere ist am genannten Ende bzw. innen und aussen je durch eine Schweiss-Verbindung 109 bzw. 110, d.h. Schweissnaht, fest, unlösbar und dicht mit dem Verbindungsteil 107 verbunden.

Die parallel zur Fensterachse 101 gemessene Abmessung des Verbindungsteils 107 ist gleich der Dicke der Glasscheibe 105 und der Fassung 106. Der Innendurchmesser des ringförmigen Verbindungsteils 107 ist ungefähr gleich dem Aussendurchmesser der Fassung 106, so dass die letztere satt und mindestens annähernd spielfrei in den Verbindungsteil 107 hineinpasst.

Der Steg 107a ist im Querschnitt beispielsweise ungefähr gleich dick wie das den Mantel 103 bildende Blech. Jeder Schenkel 107b, 107c hat im Querschnitt eine Dicke s, die beispielsweise ungefähr gleich der Dicke des Stegs 107a ist. Jeder Schenkel 107b, 107c hat im Querschnitt einen von der Innenfläche des Stegs 107a aus gemessene Abmessung oder Höhe h. Diese ist ungefähr gleich dem Abstand des mit dem Verbindungsteil 107 verschweissten Randes des Verbindungsabschnitts 103b von der Umfangsfläche 106d der Fassung 106. Die einander zugewandten Flächen der beiden Schenkel 107b, 107c haben voneinander einen Abstand a. Die Dicke s der Schenkel 107b, 107c beträgt vorzugsweise höchstens 25%, besser höchstens 15% und zum Beispiel ungefähr 10% der Dicke d. Die Abmessung oder Höhe h der Schenkel 107b, 107c beträgt vorzugsweise mindestens 5% sowie zum Beispiel ungefähr 7% bis 12% des Aussendurchmessers der Fassung 106 und vorzugsweise mindestens 50% sowie zum Beispiel ungefähr 70% bis 120% des Abstandes a. Der Aussendurchmesser der Fassung 106 kann beispielsweise etwa 45 mm bis 250 mm betragen. Die Dicke d kann dann - abhängig vom Aussendurchmesser der Fassung 106 und von der erforderlichen Druckfestigkeit - zum Beispiel ungefähr 10 mm bis 30 mm betragen. Die Dicke s kann dann beispielsweise etwa 1 mm bis 3 mm betragen.

Die dem Steg 107a abgewandten Enden der Schenkel 107b und 107c stehen bei den beiden Rändern der zylindrischen Umfangsfläche 106d der Fassung 106 an der Umfangsfläche 106d an. Die einander abgewandten Flächen der beiden Schenkel 107b, 107c fluchten mindestens annähernd mit den beiden ebenen Flächen 106a bzw. 106b der Fassung 106. Die beiden Schenkel 107b und 107c sind durch Schweissverbindungen 111 bzw. 112, d.h. Schweissnähte, fest, unlösbar und dicht mit der Fassung 106 verbunden.

Die Innenfläche 103c des Mantels 103 und die Innenflächen 105a, 106a, 107d sind bei den Verbindungsstellen der verschiedenen Teile stufenlos und fugenlos miteinander verbunden. Die Innenflächen 105a, 106a, 107d des Fensters liegen in einer Ebene, die ungefähr und beispielsweise genau tangential zur zylindrischen Innenfläche des Hauptabschnitts des Mantels 103 ist. Die Innenfläche 103c des Mantels 103 ist dann in dem in der Fig. 2 gezeichneten, durch die Achsen 4 und 101 verlaufenden Schnitt beispielsweise auch beim Verbindungsabschnitt 103b gerade sowie parallel zu den ebenen Innenflächen 105a, 106a, 107d des Fensters 64 und durch die Schweiss-Verbindung 109 bündig, stetig sowie glatt mit der ebenen Innenfläche 107d des Verbindungsteils 107 verbunden. In dem in den Figuren 3 und 4 gezeichneten, rechtwinklig zur Behälterachse 4 durch die Fensterachse 101 verlaufenden Schnitt bildet die Innenfläche des Verbindungsabschnitts 103b mindestens stellenweise einen Winkel mit der Innenfläche 107d des Verbindungsteils 107. Dieser Winkel beträgt überall mindestens 90°, vorzugsweise überall mehr als 90° und bis 180°. Der Verbindungsabschnitt 103b ist in dem in den Figuren 3 und 4 gezeichneten Schnitt beispielsweise leicht S-förmig gebogen, so dass sein Innenfläche sich ungefähr oder genau gerade sowie bündig an die Innenfläche 107d des Verbindungsteils 107 anschliesst und diese stetig und glatt, d.h. ohne Kanten, mit der Innenfläche des zylindrischen Hauptabschnitts des Mantels 103 verbindet. Der Verbindungsabschnitt 103b erweitert sich dementsprechend in durch die Fensterachse 101 verlaufenden Schnitten im allgemeinen in vom Verbindungsteil 107 weg verlaufender Richtung.

Verbundplatten mit einer ringförmigen Fassung 106 und einer in dieser eingeschmolzenen Glasscheibe 105 sind im Handel mit verschiedenen Abmessungen beispielsweise von der Firma Herberts Industrieglas GmbH + Co. KG, Wuppertal, Bundesrepublik Deutschland erhältlich. Der Verbindungsteil 107 kann beispielsweise durch spanabhebende Bearbeitungsvorgänge aus einem vollen Körper hergestellt werden. Der Verbindungsteil 107 bildet also einen einstückigen, unterbruchslosen, in sich geschlossenen Ring. Bei der Herstellung eines Behälters verschweisst man den Verbindungsteil 107 beispielsweise zuerst mit der Fassung 106 und danach mit dem Mantel 103. Die Schweiss-Verbindungen 109, 110, 111, 112 können beispielsweise durch Lichtbogen-Schweissen unter Verwendung eines Schutzgases gebildet werden. Die Schweissverbindungen 109, 111, 112 werden nach dem eigentlichen Schweissvorgang beispielsweise noch überschliffen und poliert. Die Innenflächen 105a, 106a, 107d bilden dann zusammen mit der Schweiss-Verbindung 111 eine unterbruchslos zusammenhängenden, ebene, glatte Fläche. Diese ist bei der Schweiss-Verbindung 109 vorzugsweise mindestens annähernd glatt und stetig mit der Innenfläche 103c des Mantels 103 verbunden. Die Flächen 105b, 106b und die dem Mantel 103 abgewandte Fläche des Schenkels 107c bilden zusammen mit der Schweiss-Verbindung 112 ebenfalls eine unterbruchslos zusammenhängende, ebene und glatte Fläche.

Wenn der Verbindungsteil 107 für die Befestigung des Fensters 64 am Wandungsteil 11 mit dem Verbindungsteil 103b und mit der Fassung 106 verschweisst wird, können im Verbindungsabschnitt 103b, im Verbindungsteil 107, in der Fassung 106 Deformationen und Spannungen entstehen. Durch eine geeignete Durchführung der Schweissvorgänge können diese Deformationen und Spannungen relativ klein gehalten werden. Ferner und vor allem kann der Verbindungsteil 107 mit seinen relativ schlanken Schenkeln 107b, 107c zwischen dem Verbindungsabschnitt 103b und der Fassung 106 die beim Schweissen entstehenden Deformationen und Spannungen weitgehend ausgleichen. Durch die beschriebene Ausbildung des Fensters kann daher erreicht werden, dass die Glasscheibe weder beim Verschweissen des Fensters mit dem Wandungsteil 11 noch nachher bei der Verwendung des Behälters 3 infolge der genannten Deformationen und Spannungen durch Risse oder Sprünge beschädigt wird.

Die ebenfalls einen kreisförmigen Umriss aufweisenden Fenster 61 und 63 sind vorzugsweise derart an den im wesentlichen konischen Mänteln der Wandungsteile 9 bzw. 10 angeordnet, dass die ebenen Flächen ihrer Glasscheiben, Fassungen und Verbindungsteile bzw. Halter in einem durch die Behälterachse 4 und die Fensterachse des betreffenden Fensters verlaufenden Vertikalschnitt parallel zu dem sich am nächsten bei ihnen befindenden Abschnitt des konischen Mantels des betreffenden Wandungsteils sind. Die Fensterachsen der Fenster 61, 63 kreuzen dann die Behälterachse 4 unter einem von 90° verschiedenen Winkel. Abgesehen von diesen Unterschieden können die Fenster 61 und 63 gleich oder ähnlich ausgebildet sein wie das anhand der Figuren 2 und 3 beschriebene Fenster 64.

Das längliche, separat in der Fig. 5 gezeichnete Fenster 62 besitzt eine Verbundplatte 124 mit mehreren, beispielsweise vier kreisförmige Glasscheiben 125, deren Zentren auf einer Geraden liegen, die ihrerseits in einer vertikalen, durch die Behälterachse 4 verlaufenden Ebene liegt. Das Fenster 62 besitzt eine längliche, einstückige Fassung 126 mit vier kreisförmigen Löchern, in welche die Glasscheiben 125 eingeschmolzen sind. Die Umfangsfläche der Fassung 126 hat zwei in ihrer Längsrichtung verlaufende, gerade, zueinander parallele Abschnitte und zwei diese paarweise miteinander verbindende, halbkreisförmige Abschnitte. Ferner ist ein die Fassung 126 umschliessender Verbindungsteil bzw. Halter 127 vorhanden. Dieser hat entsprechend dem Umriss der Fassung 126 die Form eines länglichen Rings. Im übrigen ist der Verbindungsteil 127 ähnlich wie der Verbindungsteil 107 ausgebildet und analog wie dieser mit dem konischen Mantel des Wandungsteils 10 und mit der Fassung 126 verschweisst. Die Höhe h der Schenkel des Verbindungsteils 127 beträgt dann vorzugsweise mindestens 5% sowie zum Beispiel mindestens 7% der Breite der Fassung 126.

Die Fenster 94 des Nachentstaubers 71 können gleich oder ähnlich wie die Fenster 64 ausgebildet und befestigt sein.

Nun wird der Betrieb der Wirbelschicht-Einrichtung 1 beschrieben.

Wenn ein teilchenförmiges, zum Beispiel zur Bildung eines Arzneimittels dienendes Gut im Behälter 3 bewegt und behandelt werden soll, wird eine Charge dieses teilchenförmigen Gutes durch den vorübergehend geöffneten Guteinlass 33 in den Wirbel- und Prozessraum 28b eingebracht. Ferner wird ein aus Luft bestehendes Prozessgas durch den Gaseinlass 29 in den Gasverteiler-Raum 28a, von diesem nach oben durch den sich in seiner horizontalen Stellung befindenden Siebboden 21, durch den Wirbel- und Prozessraum 28b sowie durch die Filter 27 in den Reingas-Raum 28c und danach durch den Gasauslass 29 aus dem Behälter 3 heraus und durch den Nachentstauber 71 hindurch gesaugt. Das Prozessgas verwirbelt das teilchenförmige Gut, so dass dieses eine Wirbelschicht bildet. Diese befindet sich im unteren Teil des Wirbel- und Prozessraums 28b. Beim Verwirbeln des Gutes wird eventuell mit dem Sprühorgan 37 mindestens zeitweise ein mindestens zum Teil flüssiges Sprühmaterial auf die Teilchen des Gutes gesprüht, um diese zu agglomerieren und/oder mit einem Überzug zu versehen. Ferner werden die Teilchen beim Verwirbeln getrocknet. Die Sprühorgane 43 und 47 der Nass-Reinigungsvorrichtungen 45 bzw. 53 befinden sich beim Verwirbeln eines Gutes im wesentlichen vollständig in den Gehäusen 42 bzw. 46 ausserhalb der Wandung 5. Die Sprühorgane 53 und 57 der Nass-Reinigungsvorrichtungen 51 bzw. 55 befinden sich im wesentlichen vollständig oberhalb des Wirbel- und Prozessraums 28b. Der letztere und der Gasverteiler-Raum 28a enthalten also beim Behandeln eines Gutes keine zur Nass-Reinigung dienende Sprühorgane. Entsprechendes gilt für den Rohgas-Raum 89a des Nachentstaubers.

Beim Verwirbeln des teilchenförmigen Gutes können Teilchen des Gutes und/oder durch Abrieb von solchen entstandener Staub und eventuell Sprühmaterial zu den Innenflächen der an den Wirbel- und Prozessraum 28b angrenzenden Wandungsteile 9, 10, 11 und Fenster 61, 62, 63, 64 gelangen. Da bei den Fenstern und bei den Verbindungen der Fenster mit den diesen enthaltenden Wandungsteilen keine Dichtungen, keine Spalte oder Ritzen und auch sonst praktisch keine Toträume für das von unten nach oben durch den Behälter 3 strömende Prozessgas vorhanden sind, ist die Tendenz zur Ablagerung von Staub oder anderen Verunreinigungen auf der Innenseite der Fenster gering. Versuche haben gezeigt, dass die Glasscheiben der Fenster - sogar wenn ein klebriges Sprühmaterial auf die Teilchen des Gutes aufgesprüht wird - lange einigermassen klar durchsichtig bleiben.

Zu den Innenflächen der Fenster 94 des Nachentstaubers 71 kann ebenfalls Staub gelangen, von dem jedoch ebenfalls höchstens sehr wenig abgelagert wird.

Ein Teil der Innenfläche der Wandung 5 und mindestens einige der sich im Gut-Behälter 3 befindenden Teile werden von Zeit zu Zeit und insbesondere bei einem Wechsel des verarbeiteten, teilchenförmigen Gutes und des aus diesem hergestellten Produktes mit einer Reinigungsflüssigkeit gereinigt, d. h. gewaschen. Die verschiedenen Wandungsteile des Behälters bleiben dabei dicht miteinander verbunden. Für die Nass-Reinigung wird den Nass-Reinigungsvorrichtungen 41, 45, 51, 55 abwechselnd oder gleichzeitig eine Reinigungsflüssigkeit zugeführt, die unter einem Druck von beispielsweise 400 kPa bis 1'000 kPa steht und eine Temperatur zwischen 0° C und 100° C oder eventuell bis 150° C hat. Die Reinigungsflüssigkeit besteht zum Beispiel aus Wasser, dem für gewisse Reinigungsphasen noch ein Detergens oder sonstiger Reinigungszusatz beigefügt wird. Die sich vorher in ihren Ruhe-Stellungen befindenden Sprühorgane 43, 47 werden durch die Reinigungsflüssigkeit in den Behälter-Innenraum 28 in die in der Fig. 1 gezeichneten Reinigungs-Stellungen verschoben. Desgleichen verschiebt die Reinigungsflüssigkeit die sich vorher in den Ruhe-Stellungen befindenden Sprühorgane 53, 57 nach unten in die in der Fig. 1 gezeichneten Reinigungs-Stellungen. Die Sprühorgane der Nass-Reinigungsvorrichtungen 41, 45, 51, 55 sprühen dann Reinigungsflüssigkeit gegen die Aussenflächen der Filter 27, die untere Fläche des inneren Wandungsteils 25, die Innenflächen der Wandungsteile 8 bis 11 und eventuell auch der Wandungsteile 6 sowie 7 und die an den Innenraum 28 angrenzenden Innenflächen der Fenster 61 bis 64. Die Reinigungsflüssigkeit wird zum Beispiel durch den Gutauslass 34 aus dem Behälter 3 heraus geleitet. Bei dieser Reinigung können die Innenflächen der an den Wirbel- und Prozessraum 28b angrenzenden Wandungsteile und Fenster einwandfrei gereinigt werden, ohne dass der Behälter 3 geöffnet werden muss. Die unlösbar an der Wandung 5 befestigten Fenster verbleiben bei der Reinigung selbstverständlich an der Wandung. Die Ausbildung der Fenster und ihre Verbindung mit den Wandungsteilen des Behälters 3 trägt dazu bei, dass die bei einer Nass-Reinigung zu den Fenstern gelangende Reinigungsflüssigkeit bei diesen überall gut abfliessen kann.

Die an den Rohgas-Raum 89a des Nachentstaubers 71 angrenzenden Innenflächen der Wandung und Fenster des Nachentstauber-Behälters 73 und die in diesem vorhandenen Filter 81 können mit Hilfe der Nass-Reinigungsvorrichtungen bzw. Waschvorrichtungen 85, 86 in ähnlicher Weise gereinigt werden.

Der in der Fig. 6 ersichtliche Verbindungsteil bzw. Halter 137 bildet einen in sich geschlossenen Ring und kann beispielsweise wie der Verbindungsteil 107 einen kreisförmigen Umriss oder wie der Verbindungsteil 127 einen länglichen Umriss haben und den Verbindungsteil 107 bzw. 127 ersetzen. Der, Verbindungsteil 137 hat ein U-förmiges Profil mit einem Steg 137a und zwei zueinander parallelen Schenkeln 137b bzw. 137c. Diese Schenkel sind im allgemeinen durch ebene, zueinander parallele Flächen begrenzt. Jeder Schenkel 137b, 137c ist jedoch bei seiner dem jeweils anderen Schenkel zugewandten Fläche mit mindestens einer entlang dem Schenkel verlaufenden Nut und beispielsweise mit zwei oder noch mehr solchen Nuten versehen. Die Schenkel haben dann bei jeder dieser Nuten eine Einschnürung 137d. Der Halter 137 kann in analoger Weise mit einem Wandungsteil und einer Fassung eines Fensters verschweisst werden, wie es für den Verbindungsteil 107 erläutert wurde.

Die Einrichtung kann noch auf andere Weisen geändert werden. Beispielsweise könnte man die vier kreisförmigen Glasscheiben 125 des Fensters 62 durch eine einzige, längliche Glasscheibe ersetzen.

Ferner könnte man einen Gut-Behälter vorsehen, der anstelle eines Siebbodens einen Rotor enthält. Dieser ist um die vertikale Behälterachse drehbar und besitzt eine Scheibe, die auf ihrer oberen Seite eine im wesentlichen, ebene, horizontale Fläche hat. Der Rotor bildet dann die untere Begrenzung eines Prozessraums, in dem ein mindestens zeitweise auf der Scheibe aufliegendes, teilchenförmiges Gut bewegt und behandelt werden kann. Die Wandung des Gut-Behälters kann dann mindestens ein an den Prozessraum angrenzendes, in der beschriebenen Weise ausgebildetes Fenster aufweisen.

Der mit mindestens einem Fenster versehene Behälter kann stattdessen eventuell eine Trommel zum Bewegen eines teilchenförmigen Gutes oder einen Rührer zum Mischen und/oder Nass-Granulieren eines pastösen Gutes enthalten.

Der Behälter kann ferner als Autoklav, Fermenter oder sonstiger Reaktionsbehälter oder für irgendwelche ändern Zwecke ausgebildet sein.

Des weiteren kann man mindestens ein Fenster in erfindungsgemässer Weise mit einem im wesentlichen ebenen und/oder gewölbten Blechstück verbinden, das zu einem Boden-Wandungsteil oder Deck-Wandungsteil eines Behälters gehört.

Ferner kann man eventuell auch die Wandung einer Leitung zum Leiten eines fliessfähigen Materials - wie eines Fluids und/oder eines teilchenförmigen Gutes - mit einem Fenster versehen. Dieses Fenster kann dann beispielsweise tangential an einen zylindrischen Mantel der Leitung oder radial an einem Ende eines Leitungsstückes angeordnet und an einem Wandungsteil der Leitung angeschweisst sein.

Zudem kann man möglicherweise die Fassung eines Fensters mit mindestens einem von der bzw. jeder Glasscheibe des Fensters wegragenden Schenkel versehen, der zusammen mit der restlichen Fassung aus einem einstückigen Körper besteht. Man kann dann den im Querschnitt U-förmigen Verbindungsteil weglassen und den bzw. jeden Schenkel der Fassung beispielsweise mit einem aus Blech bestehenden Mantel oder einem anderen Blechstück eines Wandungsteils verschweissen.

## Patentansprüche

1. Wandung zum Umschliessen eines Innenraumes (28, 89) eines Behälters (3, 73) oder einer Leitung, mit mindestens einem Wandungsteil (9, 10, 11, 77), der eine Innenfläche (103c) hat und mindestens ein Fenster (61, 62, 63, 64, 94) aufweist sowie umschliesst, das mindestens eine an den Innenraum (28, 89) angrenzende Glasscheibe (105, 125) mit einer Innenfläche (105a) sowie einer Umfangsfläche (105c) besitzt, **dadurch gekennzeichnet, dass** das bzw. jedes Fenster (61, 62, 63, 64, 94) die bzw. jede zu diesem gehörenden Glasscheibe (105, 125) umschliessende, dicht mit deren Umfangsfläche (105c) verbundene Fassung (106, 126) mit einer an den Innenraum (28) angrenzenden Innenfläche (106a) aufweist, dass die Fassung (106, 126) über einen zusätzlichen Verbindungsteil (107, 127, 137) mit einer Innenfläche (107d) oder unmittelbar dicht und unlösbar mit dem Wandungsteil (9, 10, 11, 77) verbunden ist und dass die genannten, zu ein und demselben Fenster (61, 62, 63, 64, 94) und dem dieses umschliessenden Wandungsteil (9, 10, 11, 77) gehörenden Innenflächen (105a, 106a, 107d, 103c) stufenlos und fugenlos miteinander verbunden sind.

2. Wandung nach Anspruch 1, **dadurch gekennzeichnet, dass** die bzw. jede Glasscheibe (105, 125) ausschliesslich durch nicht-gummielastische Teile (106, 107, 126, 127, 137) mit dem bzw. einem Wandungsteil (9, 10, 11, 77) verbunden ist.

3. Wandung nach Anspruch 1 oder 2, **dadurch gekennzeichnet, dass** der bzw. jeder genannte Wandungsteil (9, 10, 11, 77), die Fassung (106, 126) und jeder allenfalls sonst noch zum Verbinden der bzw. einer Glasscheibe (105, 125) mit dem bzw. einem Wandungsteil (9, 10, 11, 77) vorhandene Verbindungsteil (107, 127, 137) aus metallischen Materialien bestehen.

4. Wandung nach Anspruch 3, **dadurch gekennzeichnet, dass** die Fassung (106, 126) über den allfälligen Verbindungsteil (107, 127, 137) oder unmittelbar mit dem Wandungsteil (9, 10, 11, 77) verschweisst ist.

5. Wandung nach einem der Ansprüche 1 bis 4, **dadurch gekennzeichnet, dass** die bzw. jede Glasscheibe (105, 125) und die Fassung (106, 126) des bzw. jedes Fensters (61, 62, 63, 94) unlösbar miteinander verbunden sind und zusammen eine ebene Verbundplatte (104, 124) bilden.

6. Wandung nach einem der Ansprüche 1 bis 5, **dadurch gekennzeichnet, dass** für das bzw. jedes Fenster (61, 62, 63, 64, 94) ein dessen Fassung (106, 126) umschliessender, ursprünglich vom Wandungsteil (9, 10, 11, 77) und von der Fassung (106, 126) getrennter Verbindungsteil (107, 127, 137) vorhanden ist, der durch mindestens eine Verbindung (111, 112) mit der Fassung (106, 126) und durch mindestens eine von dieser in Abstand stehende Verbindung (109, 110) mit dem bzw. einem Wandungsteil (9, 10, 11, 77) verbunden ist.

7. Wandung nach Anspruch 6, **dadurch gekennzeichnet, dass** die Innenflächen (105a, 106a, 107d) der bzw. jeder zum gleichen Fenster (61, 62, 63, 64, 94) gehörenden Glasscheibe (105, 125), der zu diesem Fenster (61, 62, 63, 64, 94) gehörenden Fassung (106, 126) und des zu diesem Fenster (61, 62, 63, 64, 94) gehörenden Verbindungsteils (107, 127, 137) eben sind und in einer gemeinsamen Ebene liegen und dass der mit dem betreffenden Fenster (61, 62, 63, 64, 94) verbundene Wandungsteil (9, 10, 11, 77) einen an den Verbindungsteil (107, 127, 137) anstossenden Verbindungsabschnitt (103b) hat, dessen Innenfläche in Schnitten durch das Fenster (61, 62, 63, 64, 94) gerade und parallel zur Innenfläche (107d) des Verbindungsteils (107, 127, 137) ist und sich bündig an diese anschliesst und/oder mit der Innenfläche (107d) des Verbindungsteils (107, 127, 137) einen mindestens 90° und vorzugsweise mehr als 90° betragenden Winkel bildet.

8. Wandung nach Anspruch 6 oder 7, **dadurch gekennzeichnet, dass** der Verbindungsteil (107, 127, 137) des bzw. jedes Fensters (61, 62, 63, 64, 94) einen Steg (107a) und zwei von diesem weg gegen die Fassung (106, 126) ragende Schenkel (107b, 107c) aufweist, von denen einer an den Innenraum (28, 89) angrenzt.

9. Wandung nach Anspruch 8, **dadurch gekennzeichnet, dass** die beiden Schenkel (107b, 107c) des Verbindungsteils (107, 127) an eine Umfangsfläche (106d) der Fassung (106, 126) anstossen und einander abgewandte, ebene zueinander parallele Flächen haben, von denen jede mit einer ebenen Fläche (105a, 105b) der Glasscheibe (105, 125) und mit einer ebenen Fläche (106a, 106b) der Fassung (106, 126) in einer gemeinsamen Ebene liegt.

10. Wandung nach Anspruch 8 oder 9, **dadurch gekennzeichnet, dass** der Verbindungsteil (107, 127, 137) im Querschnitt U-förmig ist und bei dem mit dem Steg (107a) zusammenhängenden Ende des an den Innenraum (28, 89 angrenzenden Schenkels (107b) mit dem Wandungsteil (9, 10, 11, 77) verbunden ist.

11. Wandung nach einem der Ansprüche 8 bis 10, **dadurch gekennzeichnet, dass** die beiden Schenkel (107b, 107c) einander zugewandte, in einem Abstand a voneinander stehende Flächen haben, dass jeder Schenkel (107b, 107c) im Querschnitt eine Höhe h hat, die zwischen einer der Fassung (106, 126) zugewandten Fläche des Stegs (107a) und dem dem letzteren abgewandten Ende des Schenkels (107b, 107c) gemessen ist und mindestens 50% des Abstandes a beträgt, und dass jeder Schenkel (107b, 107c) eine Dicke s hat, die höchstens 25% der Höhe h beträgt.

12. Wandung nach einem der Ansprüche 1 bis 11, **dadurch gekennzeichnet, dass** der bzw. mindestens ein Wandungsteil (9, 10, 11, 77) einen einstückigen, eine Achse (4, 74) umschliessenden, im wesentlichen zu dieser rotationssymmetrischen Mantel (103a) hat, der mit dem Verbindungsteil (107, 127, 137) des bzw. mindestens eines Fensters (61, 62, 63 64, 94) verbunden ist.

13. Wandung nach einem der Ansprüche 1 bis 12, **dadurch gekennzeichnet, dass** mindestens eine Reinigungsvorrichtung (41, 45, 51, 55, 85, 86) vorhanden ist, um eine Reinigungsflüssigkeit im Innenraum (28, 89) zu zersprühen und dadurch an den Innenraum (28, 89) angrenzende Innenflächen (105a, 106a) des bzw. mindestens eines Wandungsteils (9, 10, 11, 77) und Fensters (61, 62, 63, 64, 94) zu reinigen.

14. Behälter mit einer Wandung (5, 75) nach einem der Ansprüche 1 bis 13 und mit einem von der Wandung (5, 75) umschlossenen Innenraum (28, 89), **dadurch gekennzeichnet, dass** der Innenraum (28, 89) einen Prozessraum (28b) zum Aufnehmen, Bewegen und Behandeln eines teilchenförmigen Gutes aufweist und/oder mindestens ein Filter (27, 81) enthält, das zum Filtrieren von durch ein teilchenförmiges Gut hindurch geleitetem Gas dient.

## Claims

1. Wall for enclosing an interior (28, 29) of a container (3, 73) or of a line, comprising at least one wall part (9, 10, 11, 77) which has an inner surface (103c) and has and encloses at least one window (61, 62, 63, 64, 94) which possesses at least one glass pane (105, 125) adjacent to the interior (28, 89) and having an inner surface (105a) and a circumferential surface (105c), **characterized in that** the or each window (61, 62, 63, 64, 94) has a holder (106, 126) which encloses the or each glass pane (105, 125) belonging to said window, is connected tightly to the circumferential surface (105c) of said glass pane and has an inner surface (106a) adjacent to the interior (28), that the holder (106, 126) is connected by means of an additional connection part (107, 127, 137) having an inner surface (106a) or directly tightly and nondetachably to the wall part (9, 10, 11, 77) and that said inner surfaces (105a, 106a, 107d, 103c) belonging to one and the same window (61, 62, 63, 64, 94) and to the wall part (9, 10, 11, 77) enclosing said window are connected to one another steplessly and continuously.

2. Wall according to Claim 1, **characterized in that** the or each glass pane (105, 125) is connected to the or a wall part (9, 10, 11, 77) exclusively by non-elastomeric parts (106, 107, 126, 127, 137).

3. Wall according to Claim 1 or 2, **characterized in that** the or each stated wall part (9, 10, 11, 77), the holder (106, 126) and any other connection part (107, 127, 137) present for connecting the or a glass pane (105, 125) to the or a wall part (9, 10, 11, 77) consist of metallic materials.

4. Wall according to Claim 3, **characterized in that** the holder (106, 126) is welded to the wall part (9, 10, 11, 77) directly or via the connection part (107, 127, 137) which may be present.

5. Wall according to any of Claims 1 to 4, **characterized in that** the or each glass pane (105, 125) and the holder (106, 126) of the or each window (61, 62, 63, 94) are nondetachably connected to one another and together form a flat composite plate (104, 124).

6. Wall according to any of Claims 1 to 5, **characterized in that** a connection part (107, 127, 137) which encloses the holder (106, 126) of the or each window (61, 62, 63, 64, 94) and is originally separated from the wall part (9, 10, 11, 77) and from the holder (106, 126) is present for the or each window (61, 62, 63, 64, 94) and is connected to the holder (106, 126) by at least one connection (111, 112) and to the or a wall part (9, 10, 11, 77) by at least one connection (109, 110) a distance away from said holder.

7. Wall according to Claim 6, **characterized in that** the inner surfaces (105a, 106a, 107d) of the or each glass pane (105, 125) belonging to the same window (61, 62, 63, 64, 94), of the holder (106, 126) belonging to this window (61, 62, 63, 64, 94) and of the connection part (107, 127, 137) belonging to this window (61, 62, 63, 64, 94) are flat and lie in a common plane, and that the wall part (9, 10, 11, 77) connected to the relevant window (61, 62, 63, 64, 94) has a connecting section (103b) which abuts the connection part (107, 127, 137) and whose inner surface, in sections through the window (61, 62, 63, 64, 94), is straight and parallel to the inner surface (107d) of the connection part (107, 127, 137) and connects flush with said inner surface and/or makes an angle of at least 90° and preferably more than 90° with the inner surface (107d) of the connection part (107, 127, 137).

8. Wall according to Claim 6 or 7, **characterized in that** the connection part (107, 127, 137) of the or each window (61, 62, 63, 64, 94) has a web (107a) and two limbs (107b, 107c) which project away from said web towards the holder (106, 126) and one of which is adjacent to the interior (28, 89).

9. Wall according to Claim 8, **characterized in that** the two limbs (107b, 107c) of the connection part (107, 127) abut a circumferential surface (106d) of the holder (106, 126) and have flat surfaces which face away from one another and are parallel to one another and each of which lies in a common plane with a flat surface (105a, 105b) of the glass pane (105, 125) and with a flat surface (106a, 106b) of the holder (106, 126).

10. Wall according to Claim 8 or 9, **characterized in that** the connection part (107, 127, 137) is U-shaped in cross-section and is connected to the wall part (9, 10, 11, 77) at that end of the limb (107b) adjacent to the interior (28, 89) which is continuous with the web (107a).

11. Wall according to any of Claims 8 to 10, **characterized in that** the two limbs (107b, 107c) have surfaces which face one another and are a distance a apart, that each limb (107b, 107c) has, in cross-section, a height h, which is measured between a surface of the web (107a) which faces the holder (106, 126) and that end of the limb (107b, 107c) which faces away from said web, and is at least 50% of the distance a, and that each limb (107b, 107c) has a thickness s which is at most 25% of the height h.

12. Wall according to any of Claims 1 to 11, **characterized in that** the or at least one wall part (9, 10, 11, 77) has a one-piece casing (103a) which encloses an axis (4, 74), is essentially rotationally symmetrical with said axis and is connected to the connection part (107, 127, 137) of the or at least one window (61, 62, 63, 64, 94).

13. Wall according to any of Claims 1 to 12, **characterized in that** at least one cleaning device (41, 45, 51, 55, 85, 86) is present for spraying a cleaning liquid in the interior and thus cleaning those inner surfaces (105a, 106a) of the or at least one wall part (9, 10, 11, 77) and window (61, 62, 63, 64, 94) which are adjacent to the interior (28, 89).

14. Container having a wall (5, 75) according to any of Claims 1 to 13 and having an interior (28, 89) enclosed by the wall (5, 75), **characterized in that** the interior (28, 89) has a process space (28b) for receiving, agitating and treating a particulate material and/or contains at least one filter (27, 81) which serves for the filtration of gas passed through a particulate material.

## Revendications

1. Paroi conçue pour ceinturer un espace interne (28, 89) d'un récipient (3, 73) ou d'un conduit, comprenant au moins une partie de cloisonnement (9, 10, 11, 77) munie d'une surface intérieure (103c), et présentant et ceinturant au moins une fenêtre (61, 62, 63, 64, 94) qui possède au moins un vitrage (105, 125) limitrophe de l'espace interne (28, 89) et pourvu d'une surface intérieure (105a), ainsi que d'une surface périphérique (105c), **caractérisée par le fait que** la ou chaque fenêtre (61, 62, 63, 64, 94) présente une monture respective (106, 126) qui ceinture respectivement le ou chaque vitrage (105, 125) faisant partie intégrante de ladite fenêtre, est reliée de manière étanche à la surface périphérique (105c) dudit vitrage, et possède une surface intérieure (106a) adjacente à l'espace interne (28) ; **par le fait que** ladite monture (106, 126) est reliée à la partie de cloisonnement (9, 10, 11, 77) de manière étanche et indissociable, directement ou par l'intermédiaire d'une pièce additionnelle de solidarisation (107, 127, 137) munie d'une surface intérieure (107d) ; et **par le fait que** les surfaces intérieures précitées (105a, 106a, 107d, 103c), formant partie intégrante d'une seule et même fenêtre (61, 62, 63, 64, 94) et de la partie de cloisonnement (9, 10, 11, 77) ceinturant cette dernière, sont reliées les unes aux autres sans décrochement ni interstice.

2. Paroi selon la revendication 1, **caractérisée par le fait que** le ou chaque vitrage (105, 125) est respectivement relié, à la partie ou à une partie de cloisonnement (9, 10, 11, 77), exclusivement par l'intermédiaire de pièces (106, 107, 126, 127, 137) non douées de l'élasticité du caoutchouc.

3. Paroi selon la revendication 1 ou 2, **caractérisée par le fait que** la ou chaque partie de cloisonnement précitée (9, 10, 11, 77), la monture (106, 126) et chaque pièce de solidarisation (107, 127, 137), encore éventuellement prévue pour relier respectivement le vitrage ou un vitrage (105, 125) à la partie ou à une partie de cloisonnement (9, 10, 11, 77), consistent en des matériaux métalliques.

4. Paroi selon la revendication 3, **caractérisée par le fait que** la monture (106, 126) est soudée sur la partie de cloisonnement (9, 10, 11, 77) soit directement, soit par l'intermédiaire de la pièce éventuelle de solidarisation (107, 127, 137).

5. Paroi selon l'une des revendications 1 à 4, **caractérisée par le fait que** le ou chaque vitrage (105, 125), et la monture (106, 126) de la fenêtre ou de chaque fenêtre (61, 62, 63, 94), sont respectivement solidarisés de manière indissociable et forment, conjointement, un panneau composite plan (104, 124).

6. Paroi selon l'une des revendications 1 à 5, **caractérisée par le fait qu'**il est respectivement prévu, pour la fenêtre ou chaque fenêtre (61, 62, 63, 64, 94), une pièce de solidarisation (107, 127, 137) qui ceinture la monture (106, 126) de ladite fenêtre, est initialement dissociée d'avec la partie de cloisonnement (9, 10, 11, 77) et d'avec la monture (106, 126), est reliée à ladite monture (106, 126) par l'intermédiaire d'au moins une liaison (111, 112), et est respectivement reliée à la partie ou à une partie de cloisonnement (9, 10, 11, 77) par l'intermédiaire d'au moins une liaison (109, 110) située à distance de ladite monture.

7. Paroi selon la revendication 6, **caractérisée par le fait que** les surfaces intérieures (105a, 106a, 107d) du ou de chaque vitrage (105, 125) faisant respectivement partie intégrante de la même fenêtre (61, 62, 63, 64, 94), de la monture (106, 126) faisant partie intégrante de cette fenêtre (61, 62, 63, 64, 94), et de la pièce de solidarisation (107, 127, 137) faisant partie intégrante de cette fenêtre (61, 62, 63, 64, 94), sont planes et sont situées dans un plan commun ; et **par le fait que** la partie de cloisonnement (9, 10, 11, 77) reliée à la fenêtre considérée (61, 62, 63, 64, 94) comporte une région de solidarisation (103b) qui bute contre la pièce de solidarisation (107, 127, 137) et dont la surface intérieure est rectiligne et parallèle à la surface intérieure (107d) de ladite pièce de solidarisation (107, 127, 137), observée selon des coupes passant par la fenêtre (61, 62, 63, 64, 94), et vient à fleur de ladite surface et/ou forme, avec la surface intérieure (107d) de la pièce de solidarisation (107, 127, 137), un angle mesurant au moins 90° et mesurant, de préférence, plus de 90°.

8. Paroi selon la revendication 6 ou 7, **caractérisée par le fait que** la pièce de solidarisation (107, 127, 137) de la ou de chaque fenêtre (61, 62, 63, 64, 94) comprend, respectivement, une membrure (107a) et deux branches (107b, 107c) qui dépassent au-delà de cette dernière, en direction de la monture (106, 126), et dont l'une est limitrophe de l'espace interne (28, 89).

9. Paroi selon la revendication 8, **caractérisée par le fait que** les deux branches (107b, 107c) de la pièce de solidarisation (107, 127) butent contre une surface périphérique (106d) de la monture (106, 126) et présentent des surfaces planes mutuellement parallèles, tournées à l'opposé l'une de l'autre, dont chacune se trouve dans un plan commun avec une surface plane (105a, 105b) du vitrage (105, 125) et avec une surface plane (106a, 106b) de la monture (106, 126).

10. Paroi selon la revendication 8 ou 9, **caractérisée par le fait que** la pièce de solidarisation (107, 127, 137) revêt la forme d'un U en coupe transversale et est reliée à la partie de cloisonnement (9, 10, 11, 77) au niveau de l'extrémité de la branche (107b) limitrophe de l'espace interne (28, 89), laquelle extrémité fait corps avec la membrure (107a).

11. Paroi selon l'une des revendications 8 à 10, **caractérisée par le fait que** les deux branches (107b, 107c) présentent des surfaces tournées l'une vers l'autre et mutuellement espacées d'une distance a ; **par le fait que** chaque branche (107b, 107c) possède, en coupe transversale, une hauteur h mesurée entre une surface de la membrure (107a) tournée vers la monture (106, 126), et l'extrémité de la branche (107b, 107c) tournée à l'opposé de ladite surface, ladite hauteur représentant au moins 50 % de la distance a ; et **par le fait que** chaque branche (107b, 107c) possède une épaisseur s représentant, au maximum, 25 % de la hauteur h.

12. Paroi selon l'une des revendications 1 à 11, **caractérisée par le fait que** la partie, ou au moins une partie de cloisonnement (9, 10, 11, 77), présente une enveloppe monobloc (103a) qui ceinture un axe (4, 74), offre pour l'essentiel une symétrie de révolution par rapport à ce dernier, et est reliée à la pièce respective de solidarisation (107, 127, 137) de la fenêtre, ou d'au moins une fenêtre (61, 62, 63, 64, 94).

13. Paroi selon l'une des revendications 1 à 12, **caractérisée par le fait qu'**au moins un dispositif de nettoyage (41, 45, 51, 55, 85, 86) est prévu pour pulvériser un fluide de nettoyage dans l'espace interne (28, 89) et pour nettoyer, de la sorte, des surfaces intérieures respectives (105a, 106a) de la partie ou d'au moins une partie de cloisonnement (9, 10, 11, 77) et de la fenêtre (61, 62, 63, 64, 94), qui sont adjacentes audit espace interne (28, 89).

14. Récipient muni d'une paroi (5, 75) selon l'une des revendications 1 à 13, et d'un espace interne (28, 89) ceinturé par ladite paroi (5, 75), **caractérisé par le fait que** ledit espace interne (28, 89) présente un espace de traitement (28b) destiné à la réception, à la mise en mouvement et au traitement d'une matière particulaire, et/ou renferme au moins un filtre (27, 81) servant à la filtration d'un gaz mis en circulation à travers une matière particulaire.
